Europäisches Patentamt

European Patent Office

Office européen des brevets

(19)

(11) Veröffentlichungsnummer: **0 076 010**
**B1**

(12) # EUROPÄISCHE PATENTSCHRIFT

(45) Veröffentlichungstag der Patentschrift:
08.05.85

(51) Int. Cl.⁴: **B 29 C 45/18**

(21) Anmeldenummer: 82201197.9

(22) Anmeldetag: 24.09.82

(54) **Anordnung zur Optimierung eines Spritzgiessprozesses.**

(30) Priorität· 26.09.81 DE 3138432

(43) Veröffentlichungstag der Anmeldung:
06.04.83 Patentblatt 83/14

(45) Bekanntmachung des Hinweises auf die Patenterteilung:
08.05.85 Patentblatt 85/19

(84) Benannte Vertragsstaaten:
AT CH DE FR GB IT LI

(56) Entgegenhaltungen:
DD - A - 15 295
DD - A - 66 020
DE - A - 2 230 957
DE - A - 2 643 759
DE - B - 2 754 732
KUNSTSTOFFE, Band 61, Heft 2, Februar 1971, Carl Hansen Verlag, München MENGES, STITZ, VARGEL "Grundlagen der Prozesssteuerung beim Spritzgiessen" Seiten 74-80

(73) Patentinhaber: Philips Patentverwaltung GmbH, Billstrasse 80, D-2000 Hamburg 28 (DE)
(84) Benannte Vertragsstaaten: DE

(73) Patentinhaber: N.V. Philips' Gloeilampenfabrieken, Groenewoudseweg 1, NL-5621 BA Eindhoven (NL)
(84) Benannte Vertragsstaaten: CH FR GB IT LI AT

(72) Erfinder: Hüppe, Reinhard, Laukwitzer Strasse 10, D-1000 Berlin 45 (DE)
Erfinder: Käufer, Helmut, Florastrasse 64, D-4021 Metzkausen (DE)
Erfinder: Lemke, Hans-Jürgen, Beim Schlump 18, D-2000 Hamburg 13 (DE)

(74) Vertreter: Meier, Friedrich, Dipl.-Ing. et al, c/o PHILIPS PATENTVERWALTUNG GMBH Billstrasse 80 Postfach 10 51 49, D-2000 Hamburg 28 (DE)

EP 0 076 010 B1

## Beschreibung

Die Erfindung bezieht sich auf eine Anordnung zur Optimierung eines Spritzgießprozesses, wobei qualitätsbestimmende Prozeßparameter wie Drücke, Temperaturen, Geschwindigkeiten usw. und zusätzlich wenigstens eine Eigenschaft des Produktes als ein einem Ist-Wert entsprechendes elektrisches Signal zur Korrektur eines Prozeßparameters eingegeben werden.

Aus dem Aufsatz von Dr. Ing. G. Menges »Grundlagen der Prozeßsteuerung beim Spritzgießen« aus der Zeitschrift »Kunststoffe«, Band 61, 1971, Heft 2, Seiten 74–80, sind Steuerungen und Regelsysteme für einzelne Prozeßgrößen an Spritzgießmaschinen wie Temperaturen, Drücke, Geschwindigkeiten bekannt, wobei zur selbsttätigen Regelung der Qualität von Spritzgußteilen außerhalb der Spritzgießmaschine das Gewicht bzw. die Abmessungen der Spritzgußteile erfaßt werden. Diese Meßgrößen werden zur direkten Regelung der Qualität der Spritzgußteile in die Steuerung eingegeben. Da sich die Meßvorrichtungen außerhalb der Spritzgießmaschine befinden, treten bei der Qualitätsregelung Zeitverzögerungen auf.

Außerdem ist aus der DD-PS 15 295 eine Anordnung zum Auslösen und Regeln der Arbeitstakte von Spritz- und Preßgußmaschinen bekannt, bei denen die Steuerung durch wegbegrenzende und druckabhängige Schalter erfolgt. Diese Anordnung ist dadurch gekennzeichnet, daß im Werkzeug ein Druckmeßelement angeordnet ist, das die innere Spannung des erzeugten Werkstückes im Werkzeug bzw. die bei der Herstellung des Werkstückes entstehende elastische Verformung des Werkzeuges mißt. Eigenschaften des Werkstückes, wie z. B. dessen Länge, sind hierbei nur meßbar, wenn sich das Werkstück außerhalb der Spritzgießmaschine befindet, so daß diejenigen Prozeßparameter, welche die Eigenschaften des Werkstückes bestimmen nur manuell einstellbar sind. Auch hierbei treten somit bei der Qualitätsregelung Zeitverzögerungen auf.

Weiterhin ist es aus der DE-OS 2 230 957 bekannt, die Bewegungen eines Spritzgießformteiles unter Verwendung einer Wegmeßvorrichtung zu erfassen. Diese Ist-Bewegung wird mit einer Sollwegvorgabe verglichen, und es wird ein Fehlersignal erzeugt, wenn die Ist-Bewegung von der Sollwegvorgabe abweicht. Sollen Eigenschaften des Werkstückes bei der Qualitätsregelung berücksichtigt werden, sind auch hierbei zeitaufwendige Messungen am Werkstück außerhalb der Spritzgießmaschine erforderlich.

Die genaue Einhaltung der geforderten Eigenschaften eines Fertigteiles und deren schnelles Erreichen bei Beginn eines Fertigungsprozesses sind Voraussetzungen für gleichbleibende Qualität und geringen Ausschuß.

Aufgabe der vorliegenden Erfindung ist es, eine Anordnung der eingangs genannten Art zu schaffen, mit der ein schnelles Erreichen und Beibehalten der geforderten Produkteigenschaften erzielt wird.

Diese Aufgabe wird bei einer Anordnung eingangs genannter Art dadurch gelöst, daß die einspritzseitige Formhälfte Formeinsätze aufweist, die während des Öffnungsvorganges des Werkzeuges Meßstellen am Formteil freigeben, daß in der auswerferseitigen Formhälfte Tastspitzen zur Erfassung der Länge des Formteiles zwischen den Meßstellen vorgesehen sind, deren Stellung durch an sich bekannte Mittel erfaßbar und in elektrische Signale umwandelbar ist, und daß diese Signale als Korrekturgrößen einem Regler zugeführt werden, dem zugleich auch die in elektrische Größen umgesetzten Prozeßparameter zugeführt werden.

Je nach den gestellten Anforderungen können im Maschinenbereich Einrichtungen vorgesehen sein, mit denen weitere Eigenschaften des fertigen Produktes erfaßbar und in elektrische Korrektursignale umwandelbar sind. So können beispielsweise die Härte, der Glanz, das Gewicht oder andere Eigenschaften des Produktes in der Form erfaßt und als Korrekturgrößen verwendet werden. Dabei kann es auch zweckmäßig sein, die während des weiteren Abkühlvorganges erfahrungsgemäß zu erwartenden Änderungen der Eigenschaften des Produktes dadurch zu berücksichtigen, daß die Änderungswerte bei der Vorgabe der Korrekturgröße entsprechend berücksichtigt werden. Da derartige Veränderungen im allgemeinen von dem verwendeten Rohmaterial abhängen, ist es auch möglich, solche materialbezogenen Werte als feste Größen zu speichern und materialabhängig in den Korrekturvorgang einzugeben.

Anhand der Zeichnung wird ein Ausführungsbeispiel einer zur Durchführung des vorgeschlagenen Verfahrens geeigneten Anordnung näher beschrieben. Es zeigt

Fig. 1 eine Gesamtansicht einer möglichen Anordnung,

Fig. 2 ein geschlossenes Spritzgießwerkzeug zur Herstellung von Kunststofformteilen mit Einrichtungen zur Erfassung eines Qualitätsmerkmals sowie den einspritzseitigen Teil einer Spritzgießmaschine mit Steuer- und Regeleinrichtungen gemäß der Erfindung,

Fig. 3 den auswerferseitigen Teil des in Fig. 2 dargestellten Werkzeuges mit Blick senkrecht auf die Trennebene,

Fig. 4 das Werkzeug nach Fig. 2, jedoch in geöffneter Stellung, wobei die erfindungsgemäße Einrichtung zur Erfassung eines Qualitätsmerkmals in Arbeitsstellung ist, und

Fig. 5 den auswerferseitigen Teil des in Fig. 4 dargestellten Werkzeuges mit Blick auf die Trennebene.

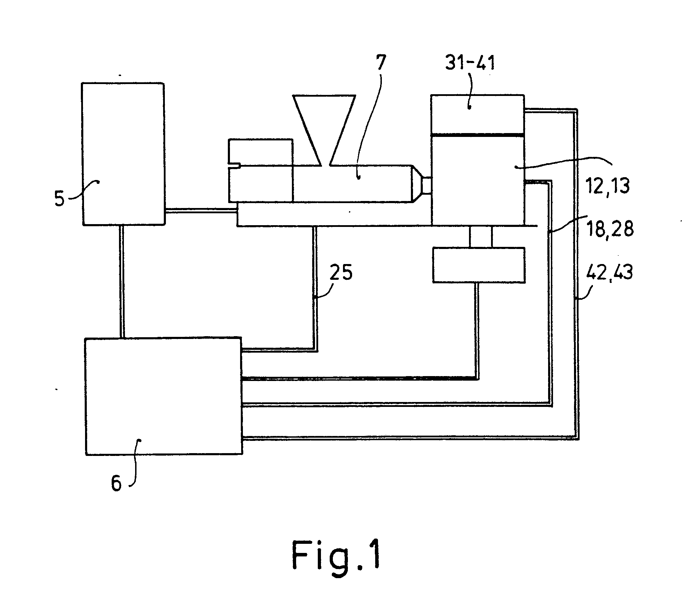

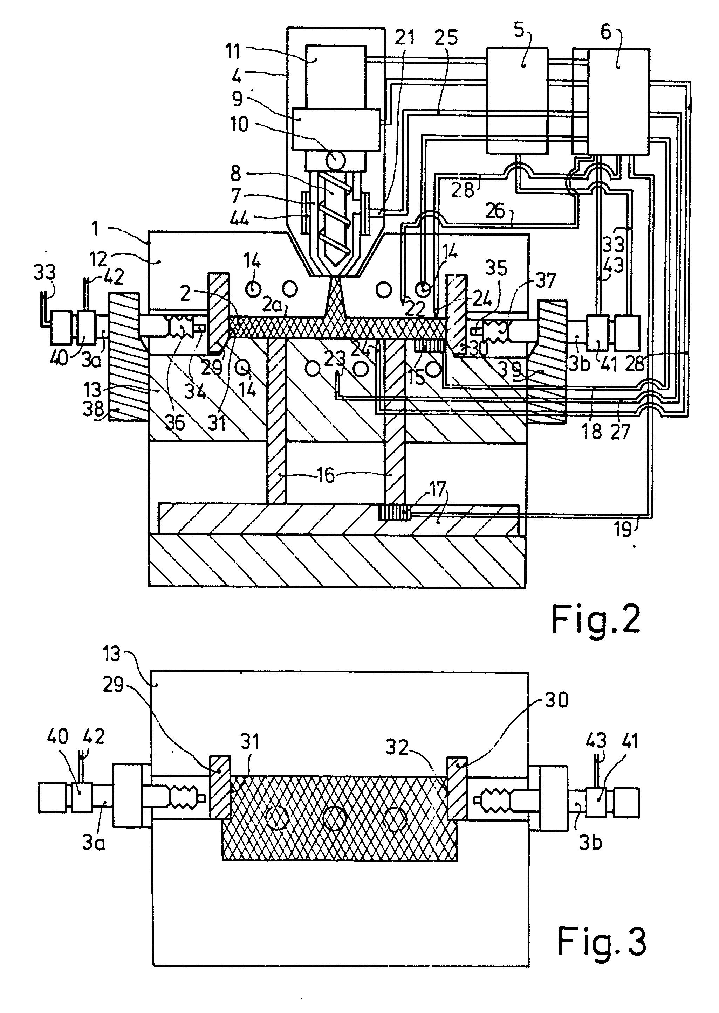

Die in Fig. 1 gezeigten Teile der Anordnung werden im Zusammenhang mit den Fig. 2 bis 5 näher erläutert.

In Fig. 2 sind ein geschlossenes Spritzgießwerkzeug 1 zur Herstellung eines Kunststofformteiles 2 mit Einrichtungen zur Erfassung eines Qualitätsmerkmals 3a, 3b, sowie der einspritzseitige Teil einer Spritzgießmaschine 4 mit Steuer- und Regeleinrichtungen 5 und 6 dargestellt. Ein im durch Heizeinrichtungen 44 beheizbaren Plastifizierzylinder 7 verschiebbar angeordneter Schneckenkolben 8 wird über eine Motor-Getriebe-Kombination 9 in Rotation versetzt und plastifiziert ein über eine Einfüllöffnung 10 aufgebrachtes Material in dem Raum zwischen Plastifizierzylinder 7 und Schneckenkolben 8. Durch axiale Kraftbeaufschlagung des Schneckenkolbens 8 mittels eines Druckzylinders 11 wird das plastifizierte Material in eine Kavität 2a gebracht, die von einer einspritzseitigen 12 und einer auswerferseitigen 13 Hälfte des Werkzeuges 1 gebildet wird, und eine einstellbare Zeit unter Druck gehalten. Die beiden Formhälften 12 und 13 verfügen über eine regelbare Temperierung 14, die eine unterschiedliche Temperierung der beiden Hälften zuläßt. Die plastifizierte Masse erstarrt in der Kavität 2a zum Formteil 2, wobei während des Füll- und Erstarrungsvorganges der Druck in der Kavität 2a mit einer Druckmeßeinrichtung 15 bzw. 17 direkt oder indirekt gemessen und an die Regeleinrichtung 6 über eine Leitung 18 weitergeleitet wird. Im gleichen Zeitraum werden die Temperaturen der Plastifizierzylinder 7 mittels einer Temperaturmeßeinrichtung 21, der beiden Werkzeughälften 12, 13 mittels Temperaturmeßeinrichtungen 22, 23, und der Masse in der Kavität 2a mittels einer weiteren Temperaturmeßeinrichtung 24 gemessen und über Leitungen 25 bis 28 an die Regeleinrichtung 6 weitergeleitet.

Nach Ablauf der einstellbaren Druckhalte und Kühlzeit wird das Werkzeug geöffnet, wobei das Kunststofformteil 2 in der auswerferseitigen Hälfte 13 festgehalten wird. Zwei Formeinsätze 29, 30 gegen in diesem Ausführungsbeispiel zwei Meßstellen 31, 32 am Formteil 2 frei. Auf ein Signal der Regeleinrichtung hin wird nun eine Einrichtung zur Erfassung eines Qualitätsmerkmals, beispielsweise einer Länge, betätigt und Tastspitzen 34, 35 über bewegliche Teile 36, 37 der Meßtaster 3a und 3b, die mit Befestigungselementen 38 39 an der auswerferseitigen Werkzeughälfte 13 angebracht sind, aus ihrer Ruheposition heraus an den Meßstellen 31, 32 gegen das Formteil gefahren, wobei dieses durch den unmittelbar vorangegangenen Formteilbildungsprozeß noch fest in der Werkzeughälfte 13 positioniert ist.

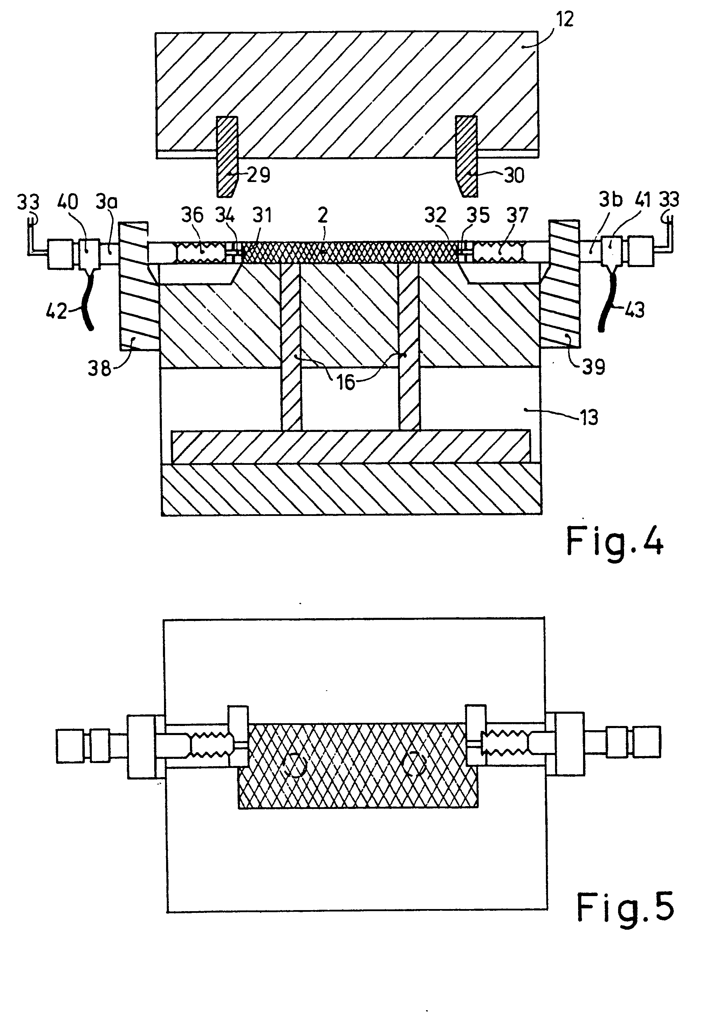

Fig. 4 zeigt die sich in Meßposition befindlichen Meßtaster 3a und 3b, von denen die Meßwerte über Aufnehmer 40, 41 als elektrisches Signal über Leitungen 42, 43 an die Regeleinrichtung 6 weitergeleitet werden. Gleichzeitig wird über die Temperaturmeßeinrichtung 24 und die Leitung 28 die Temperatur von der Regeleinrichtung registriert. Nach Quittierung der Meßwerte durch die Regeleinrichtung 6 werden die beweglichen Teile 36, 37 der Meßtaster 3a, 3b auf einen elektrischen Impuls über Leitungen 33 hin in ihre Ruheposition zurückgebracht und nach der Quittierung der Endlage über Aufnahmer 40, 41 und Leitungen 42, 43 in der Regeleinrichtung 6 über die Steuereinrichtung 5 das Vor- und Zurückfahren der Auswerferstifte 16 veranlaßt, wodurch das Formteil 2 aus der Form ausgeworfen sind. Während des Entformungsprozesses werden in der Regeleinrichtung 6 aus den Meßdaten über Temperatur, Druck in der Kavität 2a und den Qualitätsmerkmalen Korrektursignale gebildet, die über Leitungen Sollwerte der Maschinensteuerung 5 verändern. Das Maß der Korrektur wird dabei von der Regeleinrichtung 6 selbst nach einem an sich bekannten Adaptionsmechanismus gebildet.

Es leuchtet ein, daß eine Anordnung zur Durchführung des vorgeschlagenen Verfahrens auch Einrichtungen enthalten kann, mit denen das Gewicht, die Härte, der Oberflächenglanz und ähnliche Eigenschaften des fertigen Produktes erfaßt werden können, die — nach erfolgter Umwandlung in elektrische Signale — als Korrekturfaktoren die Prozeßparameter beeinflussen.

Der Vorteil des vorgeschlagenen Verfahrens besteht darin, daß die Eigenschaften des fertigen Produktes noch während des Herstellungsvorganges erfaßt werden und somit sofort Änderungen der Prozeßparameter eingeleitet werden können. Dadurch werden die geforderten Eigenschaften schneller erreicht und eine gleichbleibende Qualität ist sichergestellt.

**Patentansprüche**

1. Anordnung zur Optimierung eines Spritzgießprozessors, wobei quantitätsbestimmende Prozeßparameter wie Drücke, Temperaturen, Geschwindigkeiten usw. und zusätzlich wenigstens eine Eigenschaft des Produktes als ein einem Ist-Wert entsprechendes elektrisches Signal zur Korrektur wenigstens eines Prozeßparameters eingegeben werden, dadurch gekennzeichnet, daß die einspritzseitige Formhälfte (12) Formeinsätze (29, 30) aufweist, die während des Öffnungsvorganges des Werkzeuges (12, 13) Meßstellen (31, 32) am Formteil (2) freigeben, daß in der auswerferseitigen Formhälfte (13) Tastspitzen (34, 35) zur Erfassung der Länge des Formteiles (2) zwischen den Meßstellen (31, 32) vorgesehen sind, deren Stellung durch an sich bekannte Mittel erfaßbar und in elektrische Signale umwandelbar ist, und daß diese Signale als Korrekturgrößen einem Regler (6) zugeführt werden, dem zugleich auch die in elektrische Größen umgesetzten Prozeßparameter zugeführt werden.

2. Anordnung nach Anspruch 1, dadurch gekennzeichnet, daß im Maschinenbereich Einrichtungen vorgesehen sind, mit denen weitere Eigenschaften des fertigen Produktes erfaßbar und in elektrische Korrektursignale umwandelbar sind.

## Claims

1. An arrangement for optimizing an injection-moulding process, in which process-parameters determining the quality, such as pressures, temperatures, speeds etc, and additionally at least one property of the product are supplied as an electrical signal corresponding to an actual value for correction of at least one process-parameter, characterized in that the mould half (12) on the injection side has mould inserts (29, 30) which, during opening movement of the tool (12 13), give access to measuring points (31, 32) on the moulding (2), in that for ascertaining the length of the moulding (2) betweem the measuring points (31, 32) there are provided in the mould half (13) on the ejector side probe tips (34, 35) whose position can be ascertained and can be converted into electrical signals by known means, and in that these signals are supplied as correction values to a controller (6) to which the process-parameters converted into electrical values are supplied at the same time.

2. An arrangement as claimed in Claim 1, characterized in that at the area of the machine devices are provided, by means of which further properties of the finished product can be ascertained and can be converted into electrical corrections signals.

## Revendicactions

1. Dispositif pour l'optimisation d'un procédé de moulage par injection dans lequel sont utilités, d'une part, des paramètres de processus déterminant la qualité, tels que des pressions, des températures, des vitesses etc., et, d'autre part, au moins une propriété du produit convertie en un signal électrique correspondant à une valeur effective et servant à corriger un paramètre de processus, caractérisé en ce que le demi-moule (12) situé du côté injection présente des pièces d'insertion (29, 30) qui lors de l'opération d'ouverture du moule (12, 13), libèrent des points de mesure (31, 32) sur la pièce moulée (2), en ce que dans le demi-moule (13) situé du côté éjection, sont prévues des touches (34, 35) servant à détecter la longueur de la pièce moulée (2) entre les points de mesure (31, 32), touches dont la position peut être détectée et convertie en signaux électriques par des moyens en soi connus et en ce que ces signaux sont appliqués comme des gandeurs de correction à un régulateur (6) auquel sont appliqués en même temps les paramètres de processus convertis en grandeurs électriques.

2. Dispositif selon la revendication 1, caractérisé en ce que la machine est munie de dispositif permettant de détecter d'autres propriétés du produit fini et de les convertir en signaux de correction électriques.

Fig.1

Fig.2

Fig.3

0 076 010

Fig.4

Fig.5

9